# EUROPÄISCHE PATENTSCHRIFT

(11) **EP 3 749 872 B1**
(45) Veröffentlichungstag und Bekanntmachung des Hinweises auf die Patenterteilung: **18.05.2022**
(21) Anmeldenummer: 19701765.0
(22) Anmeldetag: 23.01.2019
(51) Int. Cl.: F16D 1/02, F16B 7/04, F16D 1/08, F16B 41/00

(54) **VERFAHREN ZUM KLEMMVERBINDEN EINES HOHLWELLENBEREICHS MIT EINER WELLE MITTELS EINES KLEMMRINGS UND ANORDNUNG ZUR DURCHFÜHRUNG DES VERFAHRENS**
METHOD FOR CLAMPING A HOLLOW SHAFT AREA TO A SHAFT BY MEANS OF A CLAMPING RING AND ARRANGEMENT FOR CARRYING OUT THE METHOD
PROCEDE DE SERRAGE D'UNE ZONE D'ARBRE CREUX SUR UN ARBRE AU MOYEN D'UNE BAGUE DE SERRAGE ET DISPOSITIF POUR LA MISE EN OEUVRE DU PROCEDE

(30) Priorität: 09.02.2018 DE 102018001081
(43) Veröffentlichungstag der Anmeldung: 16.12.2020
(73) Patentinhaber: SEW-EURODRIVE GmbH & Co. KG, 76646 Bruchsal (DE)
(72) Erfinder: WÖPPERMANN, Markus, 76307 Karlsbad (DE); HALLER, Sascha, 76135 Karlsruhe (DE)
(86) Internationale Anmeldenummer: PCT/EP2019/025023
(87) Internationale Veröffentlichungsnummer: WO 2019/154561

(56) Entgegenhaltungen:
- WO-A1-2017/094171
- CN-Y- 200 968 362
- DE-A1-102011 013 887
- JP-U- S56 151 509
- US-A- 4 830 297

## Beschreibung

Die Erfindung betrifft ein Verfahren zum Klemmverbinden eines Hohlwellenbereichs mit einer Welle mittels eines Klemmrings und eine Anordnung zur Durchführung des Verfahrens.

Aus der DE 101 55 581 A1 ist eine radiale Klemmnabe bekannt. Dabei wird der Klemmring im entspannten Zustand montiert und dann durch Betätigen der Schraube weiter aufgeschrumpft.

Aus der DE 10 2011 013 887 A1 ist eine Klemmkupplung zur drehfesten Verbindung zweier drehender Teile, vorzugsweise Welle und Nabe, bekannt.

Aus der WO 2017/094171 A ist als nächstliegender Stand der Technik eine Klemmverbindung bekannt, bei der ein axial gerichteter Stift eine tangential gerichtete Klemmschraube begrenzt.

Aus der JP S56 151 509 U ist eine axiale Sicherung einer Schraube bekannt. Aus der CN 200 968 362 Y ist eine Klemmverbindung bekannt, bei der ein axial gerichteter Stift eine tangential gerichtete Klemmschraube begrenzt.

Aus der US 4 830 297 A ist eine kraftschlüssige Verbindung bekannt, wobei eine Hohlwelle mit einer Vollwelle verbunden wird.

Der Erfindung liegt daher die Aufgabe zugrunde, eine Klemmverbindung weiterzubilden.

Erfindungsgemäß wird die Aufgabe bei dem Verfahren nach den in Anspruch 11 und bei der Anordnung nach den in Anspruch 1 angegebenen Merkmalen gelöst.

Wichtige Merkmale bei der Anordnung sind, dass es zum Klemmverbinden eines Hohlwellenbereichs, insbesondere Adapterwelle, mit einer Welle vorgesehen ist,
wobei die Anordnung zumindest einen Hohlwellenbereich und einen Klemmring umfasst,
wobei die Welle in den Hohlwellenbereich einführbar ist, auf welchen der Klemmring aufgesteckt ist,
wobei der Klemmring einen radial und axial durchgehenden Schlitz aufweist,
wobei eine tangential gerichtete Stufenbohrung im Klemmring angeordnet ist, welche eine Schraube aufnimmt,
wobei die Schraube in einen Gewindebereich der Stufenbohrung eingeschraubt ist, welche auf der von der Stufe der Stufenbohrung abgewandten Seite des Schlitzes angeordnet ist,
wobei **der von der Schraube überdeckte Raumbereich**, insbesondere der Schraubenkopf begrenzt ist durch ein mit dem Klemmring verbundenes Begrenzungselement, welches in der Stufenbohrung auf der von der Stufe abgewandten Seite des Schraubenkopfes angeordnet ist, wobei das Begrenzungselement in einen weiteren Gewindebereich der Stufenbohrung teilweise hineinragt, insbesondere wobei das Begrenzungselement elastisch gespannt ist, insbesondere und dadurch abgestützt ist im weiteren Gewindebereich, wobei das Begrenzungselement in Achsrichtung der Schraube formschlüssig mit dem weiteren Gewindebereich, insbesondere mit dem Klemmring, verbunden ist, wobei der weitere Gewindebereich in der im Klemmring angeordneten Stufenbohrung angeordnet ist, insbesondere wobei zumindest ein Teilbereich des weiteren Gewindebereichs auf der von der Stufe abgewandten Seite des Schraubenkopfes angeordnet ist und/oder wobei der weitere Gewindebereich auf der der Stufe zugewandten Seite des Klemmrings angeordnet ist, insbesondere ausgehend vom Schlitz des Klemmrings, wobei der in Schraubachsrichtung vom weiteren Gewindebereich überdeckte Bereich mit dem vom Schraubenkopf in Schraubachsrichtung überdeckten Bereich überlappt.

Von Vorteil ist dabei, dass einfache kostengünstige Bauteile verwendbar sind.

Bei einer vorteilhaften Ausgestaltung ist das Begrenzungselement in einen weiteren Gewindebereich der Stufenbohrung elastisch gespannt eingedrückt. Von Vorteil ist dabei, dass das Begrenzungselement sehr nah an der Schraube anordenbar ist, so dass große Kräfte beim Abstützen, insbesondere beim berührenden Begrenzen der Schraube, in das Begrenzungselement einleitbar sind und über den weiteren Gewindebereich in den Klemmring ableitbar sind.

**Der für das Einschrauben der Schraube in der Stufenbohrung ausgeführte Gewindebereich ist also auf der vom weiteren Gewindebereich abgewandten Seite des Schlitzes des Klemmrings angeordnet. Die Schraube samt ihrem Schraubenkopf ist vorzugsweise beabstandet von dem weiteren Gewindebereich, insbesondere also nicht in diesen eingeschraubt.**

Erfindungsgemäß ist ein Zackenring oder eine Tellerfeder als Begrenzungselement verwendbar und somit ein Auswuchten des Klemmrings vermeidbar. Hierzu wird auch die Schraube entsprechend dimensioniert beziehungsweise das Material der Schraube geeignet gewählt. Besonders vorteilhafte Reibverhältnisse und Schutz des Gewindebereichs der Stufenbohrung sind durch Materialwahl erreichbar, wie beispielsweise der Ausführung von Klemmring und Schraube aus Stahl und Ausführung des Begrenzungselements aus Stahl oder Teflon. Das Begrenzungselement ist mittels seiner äußeren Berandung in dem weiteren Gewindebereich unter Vorspannung gehalten. Somit ist ein in Schraubenachsrichtung formschlüssiges Verbinden des Begrenzungselements im Klemmring erreicht.

Bei einer vorteilhaften Ausgestaltung weist der Hohlwellenbereich eine Vertiefung, insbesondere eine radial gerichtete Vertiefung, auf, in welchen ein Gewindestift, insbesondere ein Gewindestift aus Stahl, zumindest teilweise hineinragt, welcher in eine radial gerichtete Gewindebohrung des Klemmrings eingeschraubt ist. Von Vorteil ist dabei, dass eine relative Ausrichtung eines Schlitzes des Hohlwellenbereichs zum Schlitz des Klemmrings erreichbar ist.

Bei einer vorteilhaften Ausgestaltung weist der Hohlwellenbereich zumindest einen radial durchgehenden, sich axial, also parallel zur Drehachse der Welle und des Hohlwellenbereichs, erstreckenden Schlitz auf. Von Vorteil ist dabei, dass eine größere Elastizität des Hohlwellenbereichs erreichbar ist.

Vorzugsweise umfasst der vom weiteren Gewindebereich in Schraubachsrichtung überdeckte Bereich den von dem Schraubenkopf in Schraubachsrichtung überdeckten Bereich.

Bei einer vorteilhaften Ausgestaltung ist das Begrenzungselement als eine in dem weiteren Gewindebereich angeordnete Tellerfeder oder Zackenring ausgeführt. Dabei stützt sich der Außenrand des Begrenzungselements in dem weiteren Gewindebereich ab. Von Vorteil ist dabei, dass eine kostengünstige einfache Ausführung ermöglicht ist.

Bei einer vorteilhaften Ausgestaltung ist die Schraube tangential ausgerichtet. Von Vorteil ist dabei, dass die Schraube senkrecht zur Schlitzebene des Schlitzes ausrichtbar ist, also in Normalenrichtung zur Schlitzebene.

Bei einer vorteilhaften Ausgestaltung ist das Begrenzungselement in dem oder einem weiteren Gewindebereich aufgenommen und/oder abgestützt, welche in der Berandung der Stufenbohrung eingebracht ist.

Bei einer vorteilhaften Ausgestaltung ist das Begrenzungselement aus Stahl, Teflon oder einem Kunststoff gefertigt und die Schraube und/oder der Klemmring aus Stahl. Von Vorteil ist dabei, dass das Schraubgewinde schützbar ist gegen Überlastung, da das Begrenzungselement zuvor verformt wird.

Bei einer vorteilhaften Ausgestaltung weist das Begrenzungselement ein mittig angeordnetes Loch auf. Von Vorteil ist dabei, dass ein Werkzeug zum Betätigen der Schraube durch das Loch hindurchführbar ist.

Bei einer vorteilhaften Ausgestaltung ist der Innendurchmesser, insbesondere der lichte Durchmesse, des Klemmrings im entspannten Zustand des Klemmrings betragsmäßig kleiner als der Außendurchmesser des Hohlwellenbereichs. Vorteiligerweise ist schon beim Entspannen des Klemmrings nach dem Aufschieben auf den Hohlwellenbereich eine kraftschlüssige Verbindung erreichbar.

Wichtige Merkmale der Erfindung bei dem Verfahren zum Klemmverbinden eines Hohlwellenbereichs, insbesondere Adapterwelle, mit einer Welle mittels eines Klemmrings sind, dass der Klemmring einen Schlitz, insbesondere einen radial und axial durchgehenden Schlitz, aufweist,
wobei die Schlitzweite des Schlitzes mittels einer Schraube einstellbar ist,
wobei **der von der Schraube überdeckte Raumbereich**, insbesondere der Bewegungsfreiheitsgrad der Schraube in Richtung der Schraubachse und/oder der beim Drehen der Schraube von der Schraube überdeckte Raumbereich, mittels eines mit dem Klemmring verbundenen Begrenzungselements begrenzt ist oder wird,
wobei in einem ersten Verfahrensschritt mittels der Schraube der Klemmring derart vorgespannt wird, dass die Schlitzweite einen größeren Wert erreicht als die Schlitzweite im entspannten Zustand des Klemmrings erreicht,
wobei danach in einem zweiten Verfahrensschritt der Klemmring auf den Hohlwellenbereich aufgesteckt wird,
wobei danach in einem dritten Verfahrensschritt, insbesondere mittels Betätigens der Schraube, die Schlitzweite verringert wird, bis der Klemmring entspannt ist und/oder bis die vorgesehene kraftschlüssige Verbindung des Hohlwellenbereichs mit der Adapterwelle erreicht wird.

Von Vorteil ist dabei, dass der Arbeitsbereich des Klemmrings vergrößert ist. Denn durch die Vorspannung mittels Aufweiten des Klemmrings ist im Gegensatz zum Stand der Technik der Arbeitsbereich viel größer. Nach dem Aufstecken des Klemmrings entspannt sich dieser und drückt schon dabei den Hohlwellenbereich an die Welle. Ein geringfügiges Weiterschrauben der Schraube bewirkt schon die gewünschte Klemmkraft beziehungsweise das gewünschte Klemmmoment. Hingegen ist im Stand der Technik nur bekannt, den Klemmring im entspannten Zustand aufzuschieben und dann durch Betätigen der Schraube weiter aufzuschrumpfen.

Außerdem ist mittels des Begrenzungselements nicht nur die Vorspannung ermöglicht, sondern auch ein vereinfachtes Lösen der Klemmverbindung. Denn beim Lösen wird die Schraube aus dem Gewindebereich der Stufenbohrung herausgeschraubt und dabei der Schraubenkopf am Begrenzungselement abgestützt. Auf diese Weise wird der Klemmring aufgeweitet und ein einfaches Lösen bewirkt.

Der Hohlwellenbereich ist vorzugsweise Bereich einer Adapterwelle, welche in einem Gehäuseteil eines Adapters gelagert ist, welcher zwischen einem Elektromotor und einem Getriebe angeordnet ist. Dabei ist das Gehäuseteil mit einem Lagerflansch oder Gehäuseteil des Elektromotors und mit einem Lagerflansch oder Gehäuseteil des Getriebes verbunden, insbesondere schraubverbunden. Die Adapterwelle ist drehfest mit einem Ritzel verbundenen, welches als das eintreibende Verzahnungsteil des Getriebes fungiert. Die Welle ist vorzugsweise eine Rotorwelle des Elektromotors, welche im Gehäuse des Elektromotors drehbar gelagert ist.

Der Klemmring ist vorteiligerweise derart ausführbar, dass der lichte Durchmesser der Ringöffnung des Klemmrings im entspannten Zustand des Klemmrings kleiner ist als der Außendurchmesser des Hohlwellenbereichs.

Bei einer vorteilhaften Ausgestaltung wird nach dem zweiten und vor dem dritten Verfahrensschritt der Klemmring in Umfangsrichtung relativ zum Hohlwellenbereich ausgerichtet, insbesondere indem ein in eine Gewindebohrung des Klemmrings eingeschraubter Gewindestift derart weit geschraubt wird, dass der Gewindestift aus dem Klemmring nach radial innen in eine Vertiefung des Hohlwellenbereichs, insbesondere in eine radial gerichtete Vertiefung am Außenumfang des Hohlwellenbereichs, zumindest teilweise hineinragt,

insbesondere so, dass eine formschlüssige Sicherung des Klemmrings relativ zum Hohlwellenbereich in Umfangsrichtung erreicht ist. Von Vorteil ist dabei, dass eine Fixierung des Schlitzes des Klemmrings relativ zu einem Schlitz des Hohlwellenbereichs ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

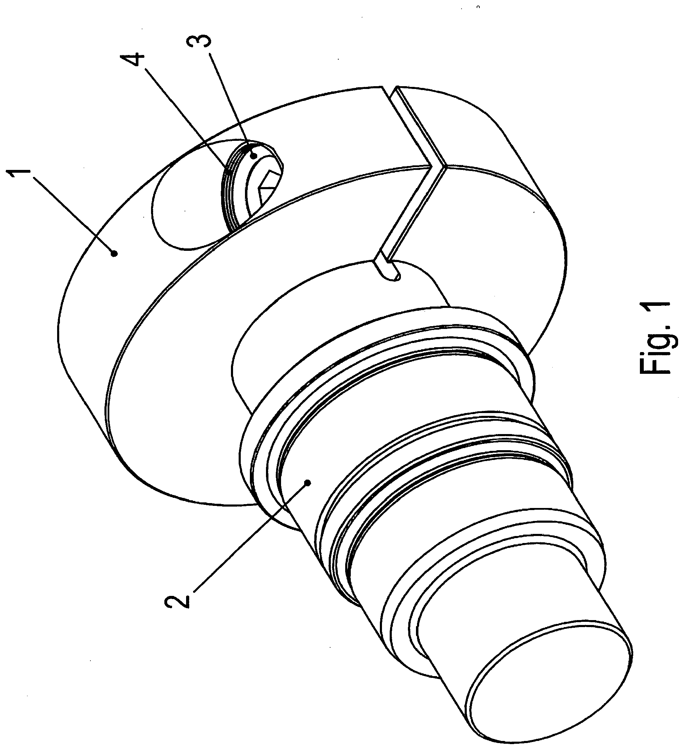

In der Figur 1 ist eine erfindungsgemäße Klemmverbindung, aufweisend einen Klemmring 1 und eine Adapterwelle 2, in Schrägansicht dargestellt.
In der Figur 2 ist ein Querschnitt durch die Klemmverbindung dargestellt.
In der Figur 3 ist ein vergrößerter Ausschnitt aus Figur 2 dargestellt.

Wie in den Figuren dargestellt, weist die Klemmverbindung eine Adapterwelle 2 auf, auf welche ein Klemmring 1 axial, also in Richtung der Mittelachse oder Drehachse der Adapterwelle 2, aufgeschoben ist, wobei die Adapterwelle 2 in dem von dem Klemmring 1 axial überdeckten Bereich hohl ausgeführt ist, so dass eine Welle in dem vom Klemmring 1 axial überdeckten Bereich, also in einen Hohlwellenbereich der Adapterwelle 2, in die Adapterwelle 2 eingeführt ist.

Durch Zusammenschrumpfen des Klemmrings 1 sind Adapterwelle 2 und Welle kraftschlüssig verbunden.

Der Klemmring 1 weist an einer Umfangsposition einen radial und axial durchgehenden Schlitz auf. In tangentialer Richtung, insbesondere senkrecht zur Schlitzebene, also in Normalenrichtung zur Schlitzebene, ist eine Stufenbohrung in den Klemmring 1 eingebracht, wobei auf der von der Stufe der Stufenbohrung abgewandten Seite des Schlitzes die Stufenbohrung einen Gewindebereich aufweist.

Der Gewindebereich ist dabei im engeren Bereich der Stufenbohrung angeordnet, also auf der von der Stufe der Stufenbohrung abgewandten Seite des Schlitzes.

Eine Schraube 3 ist in den Gewindebereich eingeschraubt. Der Schraubenkopf der Schraube 3 liegt an der Stufe der Stufenbohrung an, wenn die Schraube 3 in den Gewindebereich zunehmend eingeschraubt wird, wobei die Schlitzweite abnimmt. Bei diesem Abnehmen der Schlitzweite wird die Adapterwelle 2, insbesondere der hohle Bereich der Adapterwelle 2, auf die Welle zunehmend aufgeschrumpft.

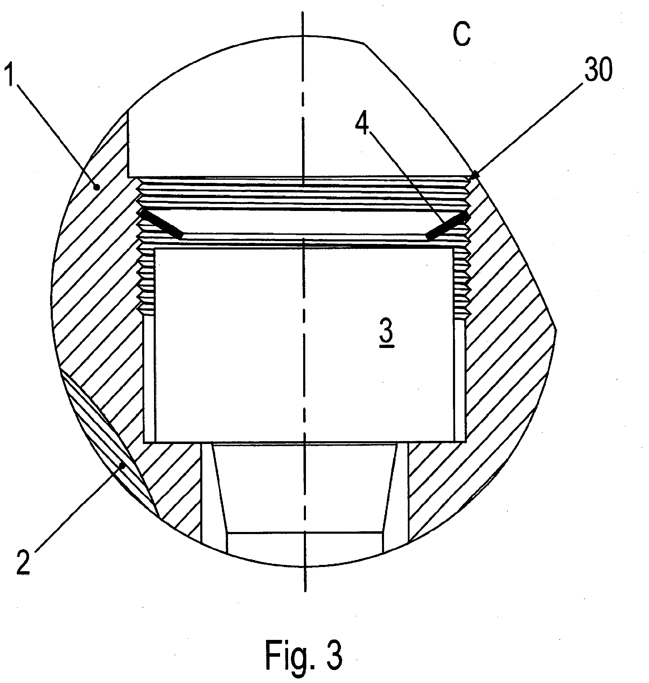

Ein weiterer Gewindebereich 30 ist im breiteren Bereich der Stufenbohrung angeordnet. Dieser überdeckt in Richtung der Schraubachse der Schraube 3 zumindest einen bei an der Stufe anliegendem Schraubenkopf der Schraube 3 auf der von der Stufe abgewandten Seite des Schraubenkopfes angeordneten Bereich. In Figur 3 ist klar gezeigt, dass dieser Bereich breiter ausgeführt ist, indem der weitere Gewindebereich 30 mit dem vom Schraubenkopf überdeckten Bereich in Schraubachsrichtung überlappt

En Begrenzungselement 4 ist in den weiteren Gewindebereich 30 eingeschoben und abgestützt. Dabei wird vorzugsweise eine Tellerfeder oder ein Zackenring verwendet.

Die Tellerfeder ist entsprechend einem Kegelstumpf geformt, insbesondere weist sie die Außenfläche des Kegelstumpfes auf. Mit ihrer größten Kante, also der Basis-Kante, ist die Tellerfeder in den weiteren Gewindebereich 30 eingedrückt und durch ihre elastische Vorspannung gehalten, weil diese Basis-Kante im entspannten Zustand der Tellerfeder einen größeren Außendurchmesserwert aufweist als den lichten Innendurchmesserwert der Stufenbohrung im weiteren Gewindebereich. Vorzugsweise ist die Tellerfeder aus Stahlblech gefertigt.

Bei Verwendung des Zackenrings statt der Tellerfeder ist der Kegelstumpf gezackt ausgeführt, also mit in Umfangsrichtung der Kegelachse des Kegelstumpfes vorzugsweise regelmäßig voneinander beabstandeten, bis zur Basis-Kante reichenden, vorzugsweise jeweils gleichartig ausgeformten Ausnehmungen. Die Basis-Kante ist unterbrochen ausgeführt. Somit weist der Zackenring eine höhere Elastizität auf, wenn der Kegelwinkel und die Materialstärke gleichartig wie bei der Tellerfeder gewählt sind. Auch der Zackenring ist vorzugsweise aus Stahlblech gefertigt.

Tellerfeder oder Zackenring weisen beide an ihrem oberen Endbereich eine Ausnehmung auf, so dass ein Werkzeug zur Betätigung der Schraube 3 durch das Begrenzungselement hindurchführbar ist.

Zum Lösen der Klemmverbindung wird die Schraube 3 aus dem Gewindebereich herausgeschraubt. Dabei wird die Bewegungsfreiheit der Schraube 3 durch das Begrenzungselement 4 eingeschränkt. Der Schraubenkopf der Schraube 3 wird also beim Herausschrauben am Begrenzungselement 4 abgestützt und somit die Schlitzweite erhöht, wodurch der Klemmring 1 aufgeweitet wird und leicht von der Adapterwelle 2 abziehbar ist und/oder die Adapterwelle 2 von der Welle leicht lösbar ist.

Das Begrenzungselement 4 ist mit dem Klemmring 1 somit in Schraubachsrichtung formschlüssig verbunden. Die Ringachse des Begrenzungselements ist parallel zur Schraubachse der Schraube ausgerichtet. Das Begrenzungselement 4 ist in dem weiteren Gewindebereich 30 also formschlüssig gehalten, wobei der weitere Gewindebereich 30 in der Wandung der Stufenbohrung eingebracht ist. Der weitere Gewindebereich 30 läuft in der Wandung der Stufenbohrung vollständig um, insbesondere also ununterbrochen. Da das Begrenzungselement ein mittig angeordnetes Loch aufweist, ist die Betätigung der Schraube mittels eines Werkzeuges durch das Begrenzungselement 4 hindurch, also durch das mittig angeordnete Loch hindurch ermöglicht. Hierzu weist die schraube 3 an ihrem Schraubenkopf einen Innensechskantbereich auf und das Werkzeug ist als Sechskant-Werkzeug ausgeführt.

Das in die Stufenbohrung hineinragende Begrenzungselement 4 begrenzt den Bewegungsraum des Schraubenkopfes der Schraube.

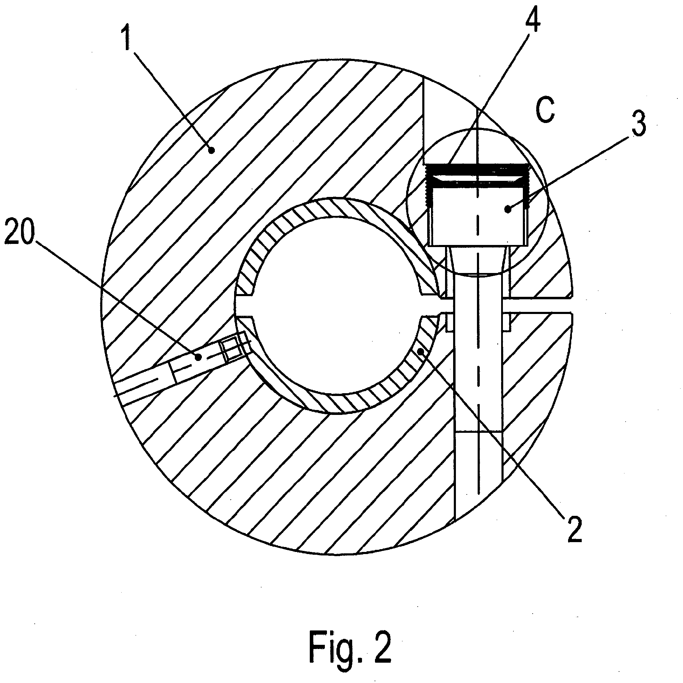

Wie in Figur 2 gezeigt, weist der Klemmring 1 eine radial durchgehende Gewindebohrung auf, in welche ein Gewindestift 20 eingeschraubt ist und nach radial innen aus dem Klemmring 1 hervorragt in eine an einer Umfangsstelle der Adapterwelle 2 angeordnete radiale Vertiefung. Die radiale Vertiefung ist vorzugsweise nicht durchgehend ausgeführt.

Somit ist die relative Position in Umfangsrichtung zwischen Klemmring 1 und Adapterwelle 2 festgelegt. Der Gewindestift 20 hat in der radialen Vertiefung in radialer Richtung Spiel, ist also in radialer Richtung vom Boden der radialen Vertiefung beabstandet.

Der Gewindestift 20 in Umfangsrichtung beabstandet von demjenigen Umfangswinkelbereich, welcher von der Stufenbohrung überdeckt ist.

Erfindungsgemäß wird bei Montage die Schraube in den Gewindebereich der Stufenbohrung eingeschraubt und danach das Begrenzungselement in den weiteren Gewindebereich 30 eingeführt, insbesondere von axialer Richtung herkommend. Da der Außendurchmesser des Begrenzungselements 4 größer ist als der größte lichte Innendurchmesser des Weiteren Gewindebereichs 30, ist ein elastisches Verformen des Begrenzungselements 4 bei diesem Einführen notwendig.

Danach wird die Schraube 3 aus dem Gewindebereich herausgedreht, so dass der Schraubenkopf der Schraube sich am Begrenzungselement 4 abstützt und die Schlitzweite größer ist als bei entspanntem Klemmring 1.

Sodann wird der Klemmring 1 auf die Adapterwelle 2 in seinem somit vorgespannten Zustand, also aufgeweiteten Zustand, axial aufgeschoben, wobei die Welle zuvor schon in den hohlen Bereich der Adapterwelle 1, insbesondere also Hohlwellenbereich, eingeschoben ist, insbesondere aus axialer Richtung kommend.

Mittels des Gewindestiftes 20 wird die relative Position in Umfangsrichtung zwischen Adapterwelle 2 und Klemmring 1 festgelegt.

Danach wird die Schraube in den Gewindebereich geschraubt, wobei zunächst der Klemmring 1 entspannt ist und somit schon eine gewisse Schrumpfkraft erzeugt. Sobald mittels des Schraubenkopfes der Schraube 3 auf die Stufe der für die Schraube 3 und das Begrenzungselement 4 vorgesehenen Stufenbohrung gedrückt wird, wird beim weiteren Einschrauben der Schraube 3 in die Gewindebohrung die Schrumpfkraft erhöht und somit die Adapterwelle 2 mit der Welle kraftschlüssig, aber mit hoher Andrückkraft angedrückt.

Vorteiligerweise ist der lichte Durchmesser der zentralen Bohrung des Klemmrings 1, also der Ringöffnung des Klemmrings 1, im entspannten Zustand des Klemmrings 1 kleiner als der Außendurchmesser desjenigen Hohlwellenbereichs der Adapterwelle 2, insbesondere im entspannten Zustand des Hohlwellenbereichs, dessen axial überdeckter Bereich vom Klemmring 1 axial überdeckt wird.

Bei dem Ausführungsbeispiel mit Zackenring als Begrenzungselement 4 weist dieser radial hervorstehende, in Umfangsrichtung vorzugsweise voneinander regelmäßig beabstandet angeordnete Bereiche, nämlich Zackenbereiche, auf. Somit ragen die Zackenbereiche an ihrem radial äußeren Rand den weiteren Gewindebereich 30, so dass der Zackenring dort abgestützt ist und somit die Schraube, insbesondere den Schraubenkopf begrenzt.

Bei dem Ausführungsbeispiel mit der Tellerfeder ist diese als Begrenzungselement 4 in den weiteren Gewindebereich 30 eingesetzt. Somit ragt der radial äußere Rand der Tellerfeder in diesen Gewindebereich 30 derart, dass die Tellerfeder dort abgestützt ist und somit die Schraube, insbesondere den Schraubenkopf, begrenzt.

### Bezugszeichenliste

1 Klemmring, geschlitzt
2 Adapterwelle
3 Schraube
4 Begrenzungselement, insbesondere Sicherungsring oder Sprengring
20 Gewindestift
30 zweiter Gewindebereich

## Patentansprüche

1. Anordnung, aufweisend zumindest einen Hohlwellenbereich und einen Klemmring (1), also zum Klemmverbinden eines Hohlwellenbereichs, mit einer Welle,
wobei die Welle in den Hohlwellenbereich einführbar ist, auf welchen der Klemmring (1) aufgesteckt ist,
wobei der Klemmring (1) einen radial und axial durchgehenden Schlitz aufweist,
wobei eine tangential gerichtete Stufenbohrung im Klemmring (1) angeordnet ist, welche eine Schraube (3) aufnimmt,
wobei die Schraube (3) in einen Gewindebereich der **eine Stufe aufweisenden** Stufenbohrung eingeschraubt ist, welche auf der von der Stufe der Stufenbohrung abgewandten Seite des Schlitzes angeordnet ist,
wobei **der von der Schraube** (3) **überdeckte Raumbereich**, insbesondere der Schraubenkopf begrenzt ist durch ein mit dem Klemmring (1) verbundenes Begrenzungselement (4), welches auf der von der Stufe abgewandten Seite des Schraubenkopfes angeordnet ist,
**dadurch gekennzeichnet, dass**
**das Begrenzungselement** (4) **in einen weiteren Gewindebereich** (30) der Stufenbohrung **teilweise hineinragt**, **insbesondere wobei das Begrenzungselement** (4) **elastisch gespannt ist, insbesondere und dadurch abgestützt ist im weiteren Gewindebereich,**
**wobei das Begrenzungselement** (4) **in Achsrichtung der Schraube** (3) **formschlüssig mit dem weiteren** Gewindebereich (30), **insbesondere mit dem** Klemmring (1), **verbunden ist,**
**wobei der weitere Gewindebereich** (30) **in der im Klemmring** (1) **angeordneten Stufenbohrung angeordnet ist, insbesondere wobei zumindest ein Teilbereich des weiteren Gewindebereichs** (30) **auf der von der Stufe abgewandten Seite des Schraubenkopfes angeordnet ist und/oder wobei der weitere Gewindebereich** (30) **auf der der Stufe zugewandten Seite des Klemmrings** (1) **angeordnet ist, insbesondere ausgehend vom Schlitz des Klemmrings,**
**wobei der in Schraubachsrichtung vom weiteren Gewindebereich** (30) **überdeckte Bereich mit dem vom Schraubenkopf in Schraubachsrichtung überdeckten Bereich überlappt.**

2. Anordnung nach Anspruch 1,
**dadurch gekennzeichnet, dass** der weitere Gewindebereich (30) , insbesondere in Richtung der Mittelachse der Stufenbohrung, vom Schlitz abgewandten Seite der Stufe der Stufenbohrung angeordnet ist, wobei das Begrenzungselement (4) an dem weiteren Gewindebereich (30) abgestützt ist.

3. Anordnung nach mindestens einem der vorangegangenen Ansprüche,
**dadurch gekennzeichnet, dass**
der Hohlwellenbereich eine Vertiefung, insbesondere eine radial gerichtete Vertiefung, aufweist, in welchen ein Gewindestift zumindest teilweise hineinragt, welcher in eine radial gerichtete Gewindebohrung des Klemmrings (1) eingeschraubt ist.

4. Anordnung nach mindestens einem der vorangegangenen Ansprüche,
**dadurch gekennzeichnet, dass**
der Hohlwellenbereich zumindest einen radial durchgehenden, sich axial, also parallel zur Drehachse der Welle und des Hohlwellenbereichs, erstreckenden Schlitz aufweist.

5. **Anordnung nach mindestens einem der vorangegangenen Ansprüche,**
**dadurch gekennzeichnet, dass**
**das Begrenzungselement** (4) **die Form eines Hohlkegelstumpfes aufweist.**

6. **Anordnung nach mindestens einem der vorangegangenen Ansprüche,**
**dadurch gekennzeichnet, dass**
**das Begrenzungselement** (4) **als Tellerfeder oder als Zackenring ausgeführt ist.**

7. Anordnung nach mindestens einem der vorangegangenen Ansprüche,
**dadurch gekennzeichnet, dass**
die Stufenbohrung und/oder die Schraube (3) tangential ausgerichtet ist.

8. Anordnung nach mindestens einem der vorangegangenen Ansprüche,
**dadurch gekennzeichnet, dass**
das Begrenzungselement (4) ein mittig angeordnetes Loch aufweist, insbesondere so dass ein Werkzeug zum Betätigen der Schraube (3) durch das Loch hindurchführbar ist.

9. Anordnung nach mindestens einem der vorangegangenen Ansprüche,
**dadurch gekennzeichnet, dass**
der Innendurchmesser, insbesondere der lichte Durchmesse, des Klemmrings (1) im entspannten Zustand des Klemmrings (1) betragsmäßig kleiner ist als der Außendurchmesser des Hohlwellenbereichs.

10. Anordnung nach mindestens einem der vorangegangenen Ansprüche,
**dadurch gekennzeichnet, dass**
der größte Außendurchmesser des Begrenzungselements (4) im entspannten Zustand des Begrenzungselements (4) größer ist als der größte lichte Durchmesser des weiteren Gewindebereichs (30) ist.

11. **Verfahren zum Herstellen einer Anordnung nach mindestens einem der vorangegangenen Ansprüche, insbesondere zum Klemmverbinden eines Hohlwellenbereichs, insbesondere Adapterwelle, mit einer Welle mittels eines Klemmrings,**
wobei der Klemmring (1) einen Schlitz, insbesondere einen radial und axial durchgehender Schlitz, aufweist,
wobei die Schlitzweite des Schlitzes mittels einer Schraube (3) einstellbar ist,
wobei **der von der Schraube** (3) **überdeckte Raumbereich**, insbesondere der Bewegungsfreiheitsgrad der Schraube (3) in Richtung der Schraubachse und/oder der beim Drehen der Schraube (3) von der Schraube (3) überdeckte Raumbereich, mittels eines mit dem Klemmring (1) verbundenen Begrenzungselements (4) begrenzt ist oder wird,
wobei in einem ersten Verfahrensschritt mittels der Schraube (3) der Klemmring (1) derart vorgespannt wird, dass die Schlitzweite einen größeren Wert erreicht als die Schlitzweite im entspannten Zustand des Klemmrings (1) erreicht,
wobei danach in einem zweiten Verfahrensschritt der Klemmring (1) auf den Hohlwellenbereich aufgesteckt wird,
wobei danach in einem dritten Verfahrensschritt, insbesondere mittels Betätigens der Schraube, die Schlitzweite verringert wird, bis der Klemmring (1) entspannt ist und/oder bis die vorgesehene kraftschlüssige Verbindung des Hohlwellenbereichs mit der Adapterwelle erreicht wird.

12. Verfahren nach Anspruch 11,
**dadurch gekennzeichnet, dass**
nach dem zweiten und vor dem dritten Verfahrensschritt der Klemmring (1) in Umfangsrichtung relativ zum Hohlwellenbereich ausgerichtet wird, insbesondere indem ein in eine Gewindebohrung des Klemmrings (1) eingeschraubter Gewindestift derart weit geschraubt wird,
dass der Gewindestift aus dem Klemmring (1) nach radial innen in eine Vertiefung des Hohlwellenbereichs, insbesondere in eine radial gerichtete Vertiefung am Außenumfang des Hohlwellenbereichs, zumindest teilweise hineinragt, insbesondere so, dass eine formschlüssige Sicherung des Klemmrings (1) relativ zum Hohlwellenbereich in Umfangsrichtung erreicht ist.

## Claims

1. An arrangement having at least one hollow shaft region and a clamping ring (1), that is for the clamping connection of a hollow shaft region to a shaft,
wherein the shaft is insertable into the hollow shaft region on which the clamping ring (1) is placed,
wherein the clamping ring (1) has a radially and axially through-passing slot,
wherein a tangentially directed stepped bore is arranged in the clamping ring (1) and receives a screw (3),
wherein the screw (3) is screwed into a threaded region of the stepped bore having a step, which stepped bore is arranged at that side of the slot remote from the step of the stepped bore,
wherein the spatial region covered by the screw (3), in particular the screw head, is limited by a limiting element (4), connected to the clamping ring (1), arranged at that side of the screw head remote from the step,
**characterized in that**
the limiting element (4) partially projects into a further threaded region (30) of the stepped bore,
in particular wherein the limiting element (4) is elastically tensioned, in particular and is thereby supported in the further threaded region,
wherein the limiting element (4) is in the axial direction of the screw (3) connected in a form-locked manner to the further threaded region (30), in particular to the clamping ring (1), wherein the further threaded region (30) is arranged in the stepped bore arranged in the clamping ring (1), in particular wherein at least a partial region of the further threaded region (30) is arranged at that side of the screw head remote from the step and/or wherein the further threaded region (30) is arranged at that side of the clamping ring (1) facing the step, in particular issues from the slot of the clamping ring,
wherein the region covered by the further threaded region (30) in the screw axial direction overlaps with the region covered by the screw head in the screw axial direction.

2. An arrangement according to claim 1,
**characterized in that**
the further threaded region (30) is, in particular in the direction of the central axis of the stepped bore, arranged on that side of the stepped bore remote from the slot,
wherein the limiting element (4) is supported at the further threaded region (30).

3. An arrangement according to at least one of the preceding claims,
**characterized in that**
the hollow shaft region has a cavity, in particular a radially directed cavity, into which there at least partially projects a threaded pin which is screwed into a radially directed tapped bore of the clamping ring (1).

4. An arrangement according to at least one of the preceding claims,
**characterized in that**
the hollow shaft region has at least one radially through-passing slot extending axially, therefore parallel to the rotational axis of the shaft and of the hollow shaft region.

5. An arrangement according to at least one of the preceding claims,
**characterized in that**
the limiting element (4) has the form of a hollow truncated cone.

6. An arrangement according to at least one of the preceding claims,
**characterized in that**
the limiting element (4) is in the form of a Belleville spring washer or a toothed ring.

7. An arrangement according to at least one of the preceding claims,
**characterized in that** the stepped bore and/or the screw (3) is/are directed tangentially.

8. An arrangement according to at least one of the preceding claims,
**characterized in that**
the limiting element (4) has a centrally arranged hole, in particular so that a tool for actuating the screw (3) can be guided through the hole.

9. An arrangement according to at least one of the preceding claims,
**characterized in that** the inner diameter, in particular the inside diameter, of the clamping ring (1) is in the relaxed state of the clamping ring (1) smaller in size than the outer diameter of the hollow shaft region.

10. An arrangement according to at least one of the preceding claims,
**characterized in that**
the largest outer diameter of the limiting element (4) in the relaxed state of the limiting element (4) is larger than the largest inside diameter of the further threaded region (30).

11. A method of producing an arrangement according to at least one of the preceding claims,
in particular for the clamping connection of a hollow shaft region, in particular an adapter shaft, to a shaft by means of a clamping ring,
wherein the clamping ring (1) has a slot, in particular a radially and axially through-passing slot, wherein the slot width of the slot is adjustable by means of a screw (3),
wherein the spatial region covered by the screw (3), in particular the degree of freedom of movement of the screw (3) in the direction of the screw axis and/or the spatial region covered by the screw (3) upon rotation of the screw (3), is limited by means of a limiting element (4) connected to the clamping ring (1),
wherein in a first method step, the clamping ring (1) is pre-tensioned by means of the screw (3) in such a manner that the slot width reaches a greater value than the slot width in the relaxed state of the clamping ring (1),
wherein thereafter in a second method step, the clamping ring (1) is placed on the hollow shaft region,
wherein thereafter in a third method step, in particular by means of actuation of the screw, the slot width is reduced until the clamping ring (1) is relaxed and/or until the provided force-locked connection of the hollow shaft region to the adapter shaft is achieved.

12. A method according to claim 11,
**characterized in that**
after the second and before the third method step, the clamping ring (1) is in the circumferential direction oriented relative to the hollow shaft region, in particular **in that** a threaded pin screwed into a tapped bore of the clamping ring (1) is screwed in to the extent that the threaded pin projects at least partially from the clamping ring (1) radially inwards into a cavity of the hollow shaft region, in particular into a radially directed cavity at the outer circumference of the hollow shaft region,
in particular so that a form-locked securing of the clamping ring (1) relative to the hollow shaft region is achieved in the circumferential direction.

## Revendications

1. Agencement comprenant au moins une zone d'arbre creux et une bague de blocage (1) et dévolu, de ce fait, à la solidarisation par blocage entre une zone d'arbre creux et un arbre,
l'arbre pouvant être inséré dans la zone d'arbre creux
sur laquelle la bague de blocage (1) est emboîtée,
ladite bague de blocage (1) étant pourvue d'une fente radialement et axialement ininterrompue,
sachant qu'un alésage étagé dirigé tangentiellement, situé dans ladite bague de blocage (1), reçoit une vis (3),
laquelle vis (3) est vissée dans une région filetée de l'alésage étagé muni d'un épaulement, disposée du côté de la fente qui pointe à l'opposé dudit épaulement de l'alésage étagé,
la région spatiale couverte par la vis (3), notamment la tête de ladite vis, étant limitée par un élément de limitation (4) relié à la bague de blocage (1) et disposé du côté de ladite tête de la vis qui pointe à l'opposé de l'épaulement,
**caractérisé par le fait que**
l'élément de limitation (4) s'engage, en partie, dans une région filetée supplémentaire (30) de l'alésage étagé,
sachant, en particulier, que ledit élément de limitation (4) est serré élastiquement et est ainsi notamment en appui dans ladite région filetée supplémentaire,
lequel élément de limitation (4) est relié par complémentarité de formes à la région filetée supplémentaire (30), en particulier à la bague de blocage (1), dans la direction axiale de la vis (3),
la région filetée supplémentaire (30) étant disposée dans l'alésage étagé situé dans la bague de blocage (1), sachant, en particulier, qu'au moins une zone partielle de ladite région filetée supplémentaire (30) se trouve du côté de la tête de la vis qui pointe à l'opposé de l'épaulement, et/ou que ladite région filetée supplémentaire (30) se trouve du côté de ladite bague de blocage (1) qui pointe vers ledit épaulement, notamment à partir de la fente de ladite bague de blocage,
la région couverte par ladite région filetée supplémentaire (30), dans la direction axiale de la vis, étant en chevauchement avec la région couverte par la tête de ladite vis dans ladite direction axiale de la vis.

2. Agencement selon la revendication 1,
**caractérisé par le fait que**
la région filetée supplémentaire (30) se trouve du côté de l'épaulement de l'alésage étagé qui pointe à l'opposé de la fente, en particulier dans la direction de l'axe médian dudit alésage étagé,
l'élément de limitation (4) prenant appui contre ladite région filetée supplémentaire (30).

3. Agencement selon au moins l'une des revendications précédentes,
**caractérisé par le fait que**
la zone d'arbre creux est dotée d'un renfoncement, en particulier d'un renfoncement dirigé radialement dans lequel s'engage, au moins en partie, un goujon fileté vissé dans un perçage taraudé de la bague de blocage (1) qui est dirigé radialement.

4. Agencement selon au moins l'une des revendications précédentes,
**caractérisé par le fait que**
la zone d'arbre creux est pourvue d'au moins une fente radialement ininterrompue qui s'étend dans le sens axial, c'est-à-dire parallèlement à l'axe de rotation de l'arbre et de ladite zone d'arbre creux.

5. Agencement selon au moins l'une des revendications précédentes,
**caractérisé par le fait que**
l'élément de limitation (4) revêt la forme d'un tronc de cône creux.

6. Agencement selon au moins l'une des revendications précédentes,
**caractérisé par le fait que**
l'élément de limitation (4) est réalisé sous la forme d'une rondelle élastique ou d'une bague crénelée.

7. Agencement selon au moins l'une des revendications précédentes,
**caractérisé par le fait que**
l'alésage étagé et/ou la vis (3) est (sont) orienté(e)(s) tangentiellement.

8. Agencement selon au moins l'une des revendications précédentes,
**caractérisé par le fait que**
l'élément de limitation (4) est muni d'un trou pratiqué centralement, notamment de façon telle qu'un outil, dédié à l'actionnement de la vis (3), puisse être engagé à travers ledit trou.

9. Agencement selon au moins l'une des revendications précédentes,
**caractérisé par le fait que**
le diamètre intérieur, en particulier le diamètre libre de la bague de blocage (1), présente un dimensionnement plus petit que celui du diamètre extérieur de la zone d'arbre creux à l'état soulagé de ladite bague de blocage (1).

10. Agencement selon au moins l'une des revendications précédentes,
**caractérisé par le fait que**
le diamètre extérieur maximal de l'élément de limitation (4) est supérieur au diamètre libre maximal de la région filetée supplémentaire (30) à l'état soulagé dudit élément de limitation (4).

11. Procédé de fabrication d'un agencement conforme à au moins l'une des revendications précédentes,
notamment dévolu à la solidarisation par blocage, au moyen d'une bague de blocage, entre un arbre et une zone d'arbre creux, en particulier un arbre adaptateur,
la bague de blocage (1) étant pourvue d'une fente, en particulier d'une fente radialement et axialement ininterrompue,
la largeur de ladite fente pouvant être réglée au moyen d'une vis (3),
sachant que la région spatiale couverte par la vis (3), notamment le degré de liberté de mouvement de la vis (3) dans la direction de l'axe de ladite vis, et/ou la région spatiale couverte par la vis (3) au cours de la rotation de ladite vis (3), est (sont) limité(e)(s), en l'état ou après coup, au moyen d'un élément de limitation (4) relié à la bague de blocage (1),
sachant que, lors d'une première étape opératoire, ladite bague de blocage (1) est précontrainte, au moyen de ladite vis (3), de telle sorte que la largeur de la fente atteigne une valeur supérieure à celle de la largeur de ladite fente à l'état soulagé de ladite bague de blocage (1),
sachant qu'à un stade successif, lors d'une deuxième étape opératoire, ladite bague de blocage (1) est emboîtée sur la zone d'arbre creux,
sachant qu'à un stade ultérieur, lors d'une troisième étape opératoire, la largeur de ladite fente est diminuée, notamment par actionnement de la vis, jusqu'à ce que ladite bague de blocage (1) soit soulagée et/ou
jusqu'à ce que soit atteinte la liaison prévue, par engagement positif, de ladite zone d'arbre creux avec l'arbre adaptateur.

12. Procédé selon la revendication 11,
**caractérisé par le fait**
**qu'**à l'issue de la deuxième, et préalablement à la troisième étape opératoire, la bague de blocage (1) est orientée par rapport à la zone d'arbre creux, dans la direction périphérique, notamment en ce sens qu'un goujon fileté, vissé dans un perçage taraudé de la bague de blocage (1), est vissé d'une profondeur telle que ledit goujon fileté sorte de ladite bague de blocage (1), vers l'intérieur dans le sens radial, pour s'engager au moins en partie dans un renfoncement de la zone d'arbre creux, notamment dans un renfoncement dirigé radialement sur le pourtour extérieur de ladite zone d'arbre creux,
en particulier de façon telle qu'un arrêt de ladite bague de blocage (1) vis-à-vis de ladite zone d'arbre creux, instauré par complémentarité de formes, soit atteint dans la direction périphérique.
